# EUROPÄISCHE PATENTSCHRIFT

(11) **EP 0 965 319 B1**
(45) Veröffentlichungstag und Bekanntmachung des Hinweises auf die Patenterteilung: **09.11.2005**
(21) Anmeldenummer: 99110846.5
(22) Anmeldetag: 07.06.1999
(51) Int. Cl.: A61G 3/00, B64D 11/00

(54) **Vorrichtung zum Transport von Kranken in einem Flugzeug**
Device for transporting patients in an aircraft
Dispositif pour transporter des malades en avion

(30) Priorität: 19.06.1998 DE 19827275
(43) Veröffentlichungstag der Anmeldung: 22.12.1999
(73) Patentinhaber: Airbus Deutschland GmbH, 21129 Hamburg (DE)
(72) Erfinder: Sprenger, Wilfried, 21698 Issendorf (DE); Schliwa, Ralf, 21739 Dollern (DE); Gabriel, Mikko, 70469 Stuttgart (DE); Deppe, Michael, 59269 Bechum (DE); Foucar, Erich, 72297 Seewald (DE); Lobentanzer, Hans Dr., 68161 Mannheim (DE)
(74) Vertreter: Hansmann, Dierk

(56) Entgegenhaltungen:
- FR-A- 2 426 608
- US-A- 3 898 704
- US-A- 4 115 884
- US-A- 4 458 864

## Beschreibung

Die Erfindung betrifft ein Flugzeug mit einer Vorrichtung zum Transport von liegenden Kranken in einem Flugzeug, wobei die Vorrichtung innerhalb der Flugzeugpassagierkabine angeordnet und als Patienten-Transporteinheit ausgebildet ist und zumindest medizinische Versorgungsgeräte sowie eine Krankentrage aufweist.

Bislang ist es üblich, für Rücktransporte von Kranken extra gecharterte Ambulanzflugzeuge einzusetzen, was aber mit hohen Kosten verbunden ist. Solche Rückholdienste sind somit bisher nur für einen begrenzten Personenkreis zugänglich bzw. sind bei einer entsprechenden Reisekrankenversicherung für die Krankenversicherungen eine kostenintensive Dienstleistung.
Aus der Zeitschrift "Aero International" 08/1996, Seite 56 ff. ist ein Patienten-Transport-System (PTS) bekannt, mit dem in Linienflugzeugen, insbesondere für Langstrecken, auch Patienten befördert werden können. Ein solches Patienten-Transport-System mit den entsprechenden medizinischen Geräten ist für eine Betreuung und Versorgung von Unfallopfern und auch von Schwerkranken vorgesehen. Es ist als Kabine ausgebildet, die bedarfsweise in eine Passagierkabine eines Flugzeuges eingebaut werden kann. Dafür müssen allerdings zwölf Economy-Sitze entfernt werden. Für eine Fluglinie ist ein solcher Sitzplatzverlust aber nicht immer akzeptabel. Es können bei schon voll ausgebuchten Flugzeugen keine "bezahlten" Sitzplätze mehr aus der Flugzeugkabine entfernt werden, was in einem solchen Fall bedeutet, daß kurzfristig ein Einsatz eines Patienten-TransportSystems nicht möglich ist und so Transporte von Unfallopfern, bei denen oftmals ein schneller Transport lebenswichtig ist, nicht durchgeführt werden können. Weiterhin gibt es zur Zeit keine ausreichende Versorgung von Notfallopfern während des Fluges. Sollte es zu einem Zwischenfall kommen und eine ärztliche Versorgung ist notwendig, wird in der Regel der nächste Flughafen angeflogen. Eine solche ungeplante Landung hat zur Folge, daß eventuell Treibstoff abgelassen und Flughafengebühr gezahlt werden muß und für die anderen Passagiere Wartezeiten entstehen. Zusatzkosten für die Fluglinie sind somit unumgänglich.

Das Dokument US-A-3 898 704 zeigt eine umrüstbare Sitz-Bett-Einrichtung, die benachbart zum Türbereich der Flugzeugpassagierkabine angeordnet ist. Bei der Bett-Konfiguration wird der Sitz in der Weise umgebaut, dass der Türbereich mit einem Teil des Bettes belegt ist. Diese Einrichtung ist für die Nutzung durch die Flugzeug-Crew vorgesehen, die -insbesondere bei Langstreckenflügen- abseits vom Passagierbereich Ruheräume benötigt. In diesem Dokument ist über eine Möglichkeit des Transports von Kranken nichts offenbart. In der Landekonfiguration wird das Bett in eine Sitz umgewandelt und somit wäre ein durchgängiger liegender Transport eines Kranken nicht möglich.

Aus US-A-4 115 884 ist eine Krankentransporteinrichtung für ein Passagierflugzeug gezeigt, welches im Passagierbereich auf umklappbaren Passagiersitzen angeordnet werden kann. Die Halterung der Krankentrage erfolgt über ein Gestell und Spanngurten, welche in Sitzschienen im Fußbodenbereich der Passagierkabine befestigt sind. Der Verlust von mehreren Sitzplätzen in mindestens zwei Sitzreihen muss bei dieser Lösung in Kauf genommen werden, was für den gesamten Krankentransport hohe Kosten verursacht.

Der Erfindung liegt daher die Aufgabe zugrunde, eine Vorrichtung zum durchgängig liegenden Transport von Kranken zu schaffen, die flexibel, platzsparend und kostengünstig und unter Vermeidung des Verlusts von mehreren Sitzplätzen den notwendigen Bedarf an Transportkapazität für Patienten in einem Flugzeug abdeckt und den Anforderungen eines modernen Rettungsdienstes gerecht wird.

Diese Aufgabe wird bei einer gattungsgemäßen Vorrichtung mit den im Patentanspruch 1 genannten Maßnahmen gelöst.

Dabei ist insbesondere von Vorteil, dass eine kostengünstige Möglichkeit für den Transport von Kranken in einem Passagierflugzeug geschaffen wurde, wobei die Vorrichtung flexibel einsetzbar ist und bei Bedarf den Airlines eine Möglichkeit zum Transport von Patienten bietet bei gleichzeitigem minimalem Platzbedarf. Während des Fluges, wenn der Türbereich nicht für den Ein- bzw. Ausstieg der Passagiere genutzt wird, kann diese Fläche als Krankentragestellfläche zur Verfügung gestellt werden. Darüber hinaus ist eine Separierung vom übrigen Passagierbereich erreicht.

Weiterbildungen und vorteilhafte Ausgestaltungen sind in den Unteransprüchen 2 bis 11 angegeben.

In der Zeichnung sind Ausführungsbeispiele der Erfindung dargestellt, die nachstehend anhand der Figuren 1 bis 7 näher beschrieben werden. In den Figuren sind gleiche Bauteile mit gleichen Bezugszeichen versehen.

Es zeigt
- Fig. 1: eine Draufsicht auf einen Kabinenlayoutausschnitt eines Passagierflugzeuges mit einer ersten erfindungsgemäßen Ausführungsform der Vorrichtung zum Transport von Kranken,
- Fig. 2: die erste Ausführungsform der erfindungsgemäßen Vorrichtung gemäß Fig. 1 im Zustand während des Fluges,
- Fig. 3: eine Draufsicht auf einen Kabinenlayoutausschnitt eines Passagierflugzeuges mit einer zweiten erfindungsgemäßen Ausführungsform der Vorrichtung zum Transport von Kranken,
- Fig. 4: die zweite Ausführungsform der erfindungsgemäßen Vorrichtung gemäß Fig. 3 während der Landung,
- Fig. 5: eine Perspektivdarstellung der Vorrichtung zum Transport von Kranken gemäß Fig. 1,
- Fig. 6: eine Perspektivdarstellung der Vorrichtung zum Transport von Kranken gemäß Fig. 2,
- Fig. 7: eine dritte Ausführungsform der Vorrichtung zum Transport von Kranken im Start- und Landezustand und
- Fig. 8: die dritte Ausführungsform der erfindungsgemäßen Vorrichtung im Flugzustand.

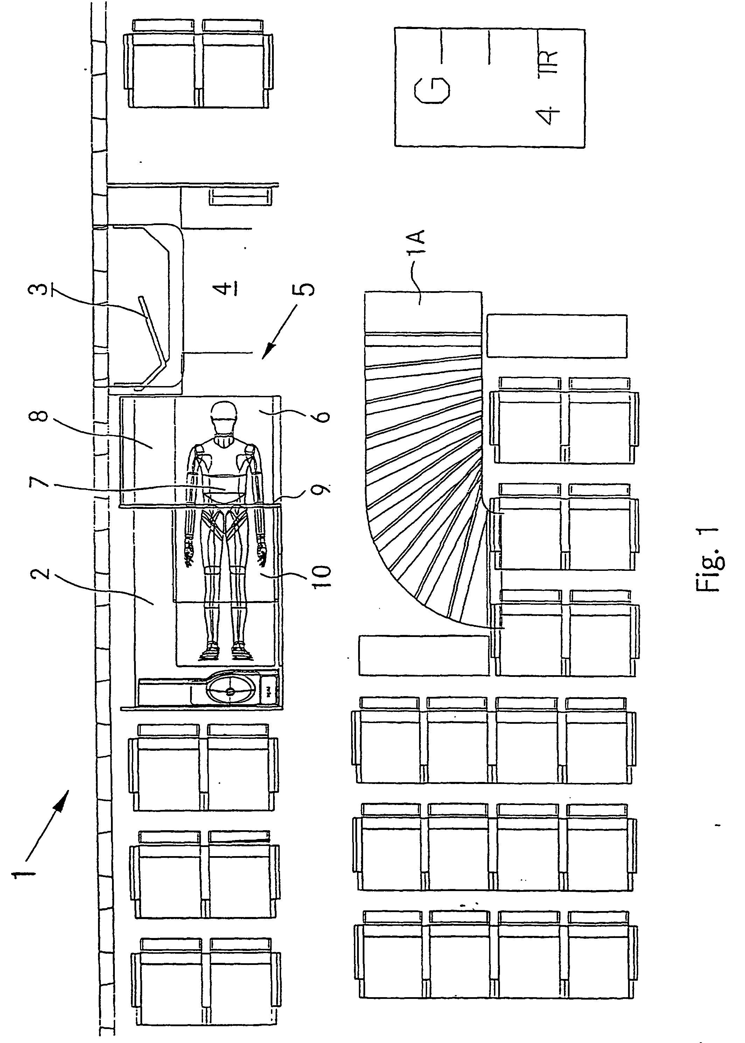

In Fig. 1 ist ein Teil einer Flugzeugpassagierkabine 1 in der Draufsicht ersichtlich. Dieser Kabinenlayoutausschnitt zeigt neben der Anordnung der Flugzeugsitze die Anordnung von Nutzräumen, wie beispielsweise einen Toilettenraum 2, in der Flugzeugkabine 1. Mehrere Toilettenräume sind entsprechend der vorgesehenen Passagieranzahl in der gesamten Passagierkabine 1 verteilt. Beispielhaft ist der Toilettenraum 2 gezeigt. Er ist üblicherweise in der Nähe eines Flugzeugausganges, d.h. der Flugzeugtür 3 angeordnet. Der Toilettenraum 2 ist vorzugsweise als Behinderten-WC vorgesehen. Ein solches Behinderten-WC ist in den Abmessungen größer als ein normaler Toilettenraum in einem Flugzeug, um auch einen Zugang für Rollstuhlfahrer zu ermöglichen. Im Türbereich 4 der Flugzeugtür 3 ist bei Bedarf vorgesehen, eine Patienten-Transporteinheit 5, ein sogenanntes "Medical Compartment" anzuordnen. Eine solche Transporteinheit 5 weist eine Krankentrage 6 sowie medizinische Versorgungsgeräte (nicht gezeigt), wie Sauerstoffversorgung, Beatmungsgerät, Defibrillator, Notfall-Arztkoffer auf. Damit kann ein Patient 7, der einer ärztlichen Betreuung bedarf, auch in Passagierflugzeugen transportiert werden, die nach dem bekannten Stand der Technik normalerweise nicht über eine spezielle Krankenversorgung und Transportmöglichkeit verfügen. Der Toilettenraum 2 ist dafür stirnseitig aufklappbar, d. h. für die Krankentragestellfläche ist einerseits teilweise der Toilettenraum 2 und andererseits der in Flugzeuglängsrichtung vor der Stirnfläche 9 des Toilettenraumes 2 angeordnete Stauschrank 8 vorgesehen. In diesem Schrank 8 können medizinische Versorgungsgeräte vorgesehen sein. Der Stauschrank 8 ist - wenn keine Umrüstung in eine Kranken-Transporteinheit 5 notwendig ist - für den normalen Passagier oder die Flugbegleiter nutzbar, beispielsweise als Gepäckraum. In einem solchen Fall ist auch der Toilettenraum 2 für die Passagiere ohne Einschränkungen nutzbar. Möglich wäre auch, statt des Stauschrankes 8 eine Passagiersitzbank an dieser Stelle der Flugzeugkabine vorzusehen (nicht gezeigt). Damit die Ablage der Krankentrage 6 wie in der Ausführung mit dem Stauschrank 8 in entsprechender Höhe möglich ist, sind die Rückenlehnen der Sitze umlegbar oder abnehmbar. Wenn kein Krankentransport vorgesehen ist, können auf diesen Sitzen Flugbegleiter oder Passagiere sitzen.
Wenn ein Krankentransport vorgesehen ist, wird zumindest ein Teil der Stirnwand 9 des Toilettenraumes 2 abgeklappt und die Krankentrage 6 ist an einem Ende innerhalb des Toilettenraumes 2 sowie am anderen Ende durch die abgeklappte Stirnwand 9 hindurch auf dem Stauschrank 8 abgestellt.
Bei Start und Landung sowie beim Ein- und Aussteigen der Passagiere ist eine Nutzung der Fläche im Türbereich 4 als Krankentragestellfläche nicht möglich. In diesem gezeigten Fall ist die Krankentrage 6 soweit in den Nutzraum 2 eingeschoben, daß zwar der Stauschrank 8 das eine Ende der Krankentragestellfläche bildet, aber der Türbereich 4 nicht belegt ist. Der Toilettenraum 2 kann während der Start- und Landephase sowie zum Ein- und Aussteigen als Toilette üblicherweise nicht genutzt werden und somit führt eine Kombination von Kranken-Transporteinheit 5 und Behinderten-WC 2 nicht zu einer Beeinträchtigung der möglichen Komfortfunktionen für die Passagiere.

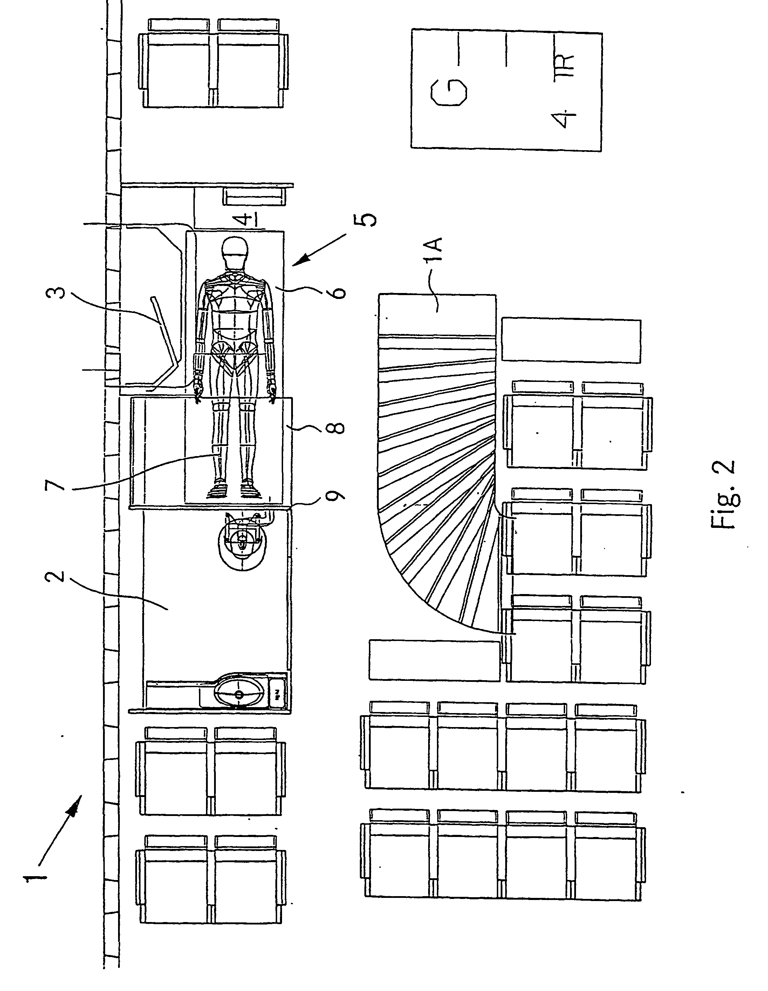

Während des Fluges ist keine Nutzung des Türbereichs 4 für den Ein- und Ausstieg von Passagieren vorgesehen. Für dieses Zeit ist somit eine anderweitige Nutzung dieser Fläche möglich. In Fig. 2 ist dieser Zustand innerhalb der Flugzeugkabine 1 gezeigt. Die Krankentrage 6 ist während des Fluges soweit aus dem Toilettenraum 2 herausgezogen, daß eine Nutzung des Raumes als WC möglich ist. Eine Kombination von einem Nutzraum 2 als Toilette und Patienten-Transporteinheit 5 ist sinnvoll, da die vorhandenen Versorgungsmöglichkeiten, wie Wasser- und Stromanschluß sowie Entlüftung sowohl für die Toilettenfunktion als auch für die medizinische Versorgung genutzt werden können. Dies hängt natürlich auch davon ab, wie intensiv die Betreuung des auf der Krankentrage 7 zu transportierenden Patienten sein muß. Falls eine dauernde ärztliche Betreuung notwendig ist und weiteres Hilfspersonal in der Nähe sein muß, kann der Nutzraum 2 vollständig als "Medical Compartment" 5 genutzt werden. In einem solchen Fall wäre die Benutzung als Toilette auch während des Fluges nicht möglich und die Passagiere müßten die weiteren, im Flugzeug vorhandenen Toiletten aufsuchen. Die Benutzung der Toilette kann auch nur für den Patienten 7 ermöglicht werden, um eine Trennung zwischen Passagiere und Patient zu erreichen. Um eine räumliche Trennung zwischen dem Patienten 7 und den Passagieren zu erreichen, kann beispielsweise ein Vorhang (nicht gezeigt), der im Türbereich 4 des Flugzeuges um die Patienten-Transport-Einheit 5 herum angeordnet ist, um somit eine Abschirmung des Patienten von den übrigen Passagieren zu erreichen.

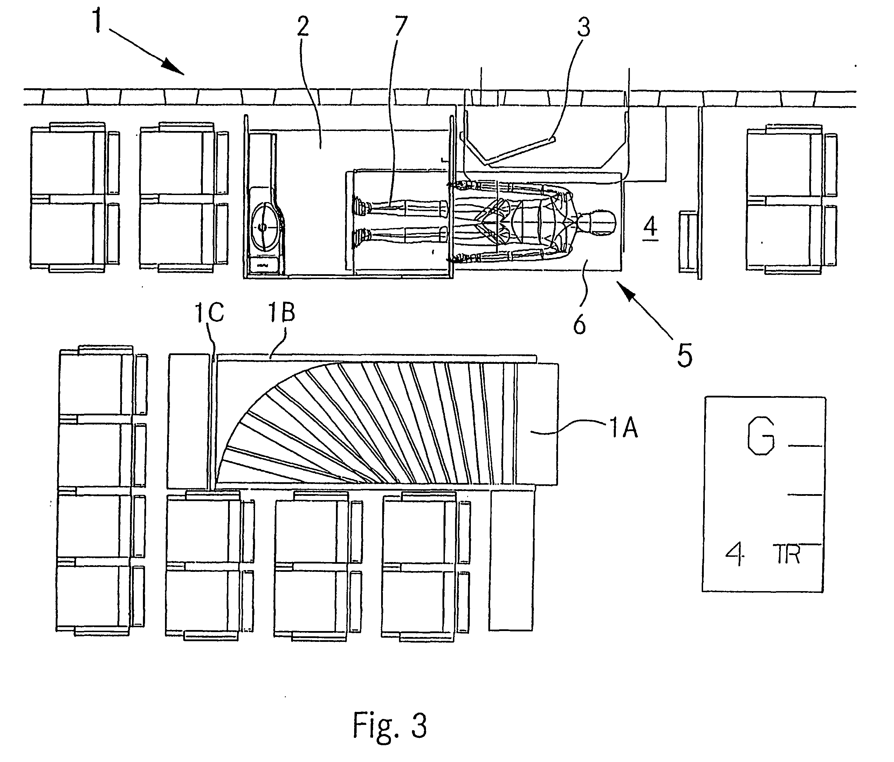

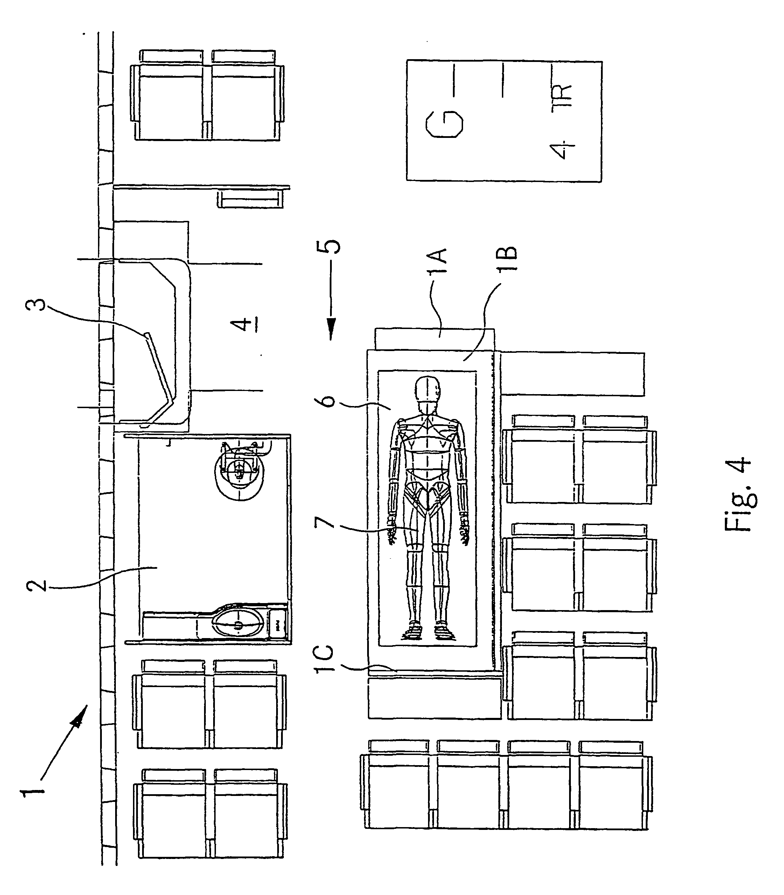

In der Fig. 3 ist eine weitere Ausführungsform einer Patienten-Transporteinheit 5 dargestellt. Es ist vorgesehen, den Toilettenraum 2 direkt neben der Flugzeugtür 3 anzuordnen. In einem solchen Fall fehlt der Stauschrank 8 als mögliche Stellfläche für die Krankentrage 6, es ist aber zusätzlich Platz für Passagiersitze in der Passagierkabine 1 gewonnen. In dieser Ausführungsform ist während des Fluges die Krankentragestellfläche im Türbereich 4 und im Toilettenraum 2 vorgesehen. Durch die abgeklappte Stirnwand 9 hindurch ist die Krankentrage 6 somit während des Fluges einerseits innerhalb des Toilettenraumes 2 und andererseits vor der Flugzeugtür 3 abgestellt. Denkbar ist auch, in Flugzeuglängsrichtung beide Stirnflächen des Toilettenraumes abklappbar zu gestalten. Damit wäre ein Hindurchschieben der Krankentrage 6 durch den Toilettenraum 2 möglich. Eine Benutzung des Raumes 2 als Toilette in dieser Ausführungsform ist während des Fluges nicht möglich und die Passagiere müßten die weiteren, im Flugzeug vorhandenen Toiletten aufsuchen. Wenn der Türbereich 4 während der Start- und Landephase nicht als Krankentragestellfläche genutzt werden kann, ist es möglich, auch andere Einbauten in der Flugzeugkabine 1 zu nutzen, wobei es erforderlich ist, immer die Gänge als Fluchtweg freizuhalten.
Eine Möglichkeit ist in Fig. 4 gezeigt, die die Flugzeugtreppe 1A zur Aufnahme der Krankentrage 6 bei Start- und Landung vorsieht. Die Treppe 1A führt in den Unterflurbereich des Flugzeuges, der während Start und Landung nicht genutzt wird und somit auch die Flugzeugtreppe 1A nicht benötigt wird. Für das Ein- und Aussteigen der Passagiere würde dies auch zu keiner Behinderung führen, da nach Öffnen der Flugzeugtür zuerst die Krankentrage 6 mit dem Patienten 7 ausgeladen werden kann, bevor der normale Vorgang des Passagierausstiegs beginnt. Vorgesehen ist, daß vom Treppenhaus mit den Wandelementen 1 B und 1C das Seitenwandelement 1 B heruntergeklappt werden kann und als Stellfläche für die Krankentrage 6 dient.

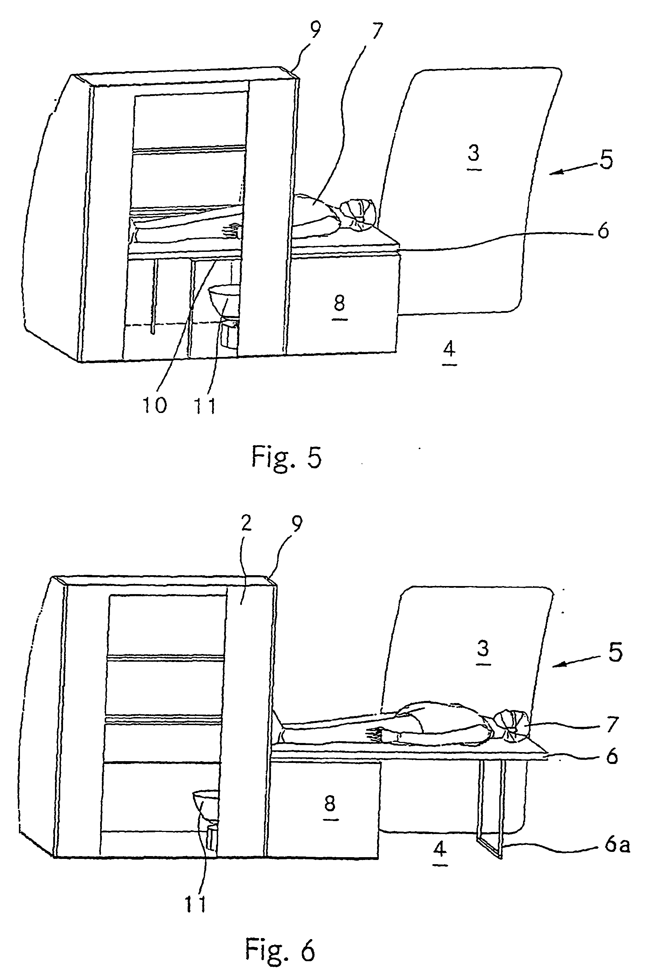

In Fig. 5 ist eine Perspektivdarstellung der ersten Ausführungform der Patienten-Transporteinheit 5 ersichtlich. Der Toilettenraum 2 ist mit geöffneter Tür und abgeklappter Stirnwand 9 für die Aufnahme der Krankentrage 6 dargestellt.

Somit ist eine Zugänglichkeit zum Patienten 7 gegeben. Die Stirnwand 9 weist zumindest ein Abklappelement 10 auf, dessen Breite mindestens der Breite der Krankentrage 6 entspricht. Das Abklappelement 10 wird in den Toilettenraum 2 abgesenkt und überdeckt vorzugsweise die Toilette 11. Stützelemente am Abklappelement 10 bilden zusammen mit dem Abklappelement 10 eine Abstützung, die zusammen mit der Stauschrankdeckfläche die Krankentrage 6 aufnimmt. Durch die entstandene Öffnung an der Stirnwand 9 hindurch ist die Krankentrage 6 mit einem Patienten 7 in den Toilettenraum 2 einschiebbar.

In Fig. 6 ist die Patienten-Transporteinheit 5 innerhalb des Türbereichs 4 der Flugzeugkabine 1 während des Fluges gezeigt. Die Krankentrage 6 ist aus dem Toilettenraum 2 herausgezogen und lagert einerseits auf dem Stauschrank 8 und andererseits auf einem Tragbügel 6A der Krankentrage 6. Die Flugzeugtür 3, die während des Fluges nicht benötigt wird, ist nicht zugänglich. Das Abklappelement 10 ist wieder in die Stirnwand 9 eingeklappt und verriegelt, sodaß eine Benutzung der Toilette 1 im Toilettenraum 2 möglich ist.

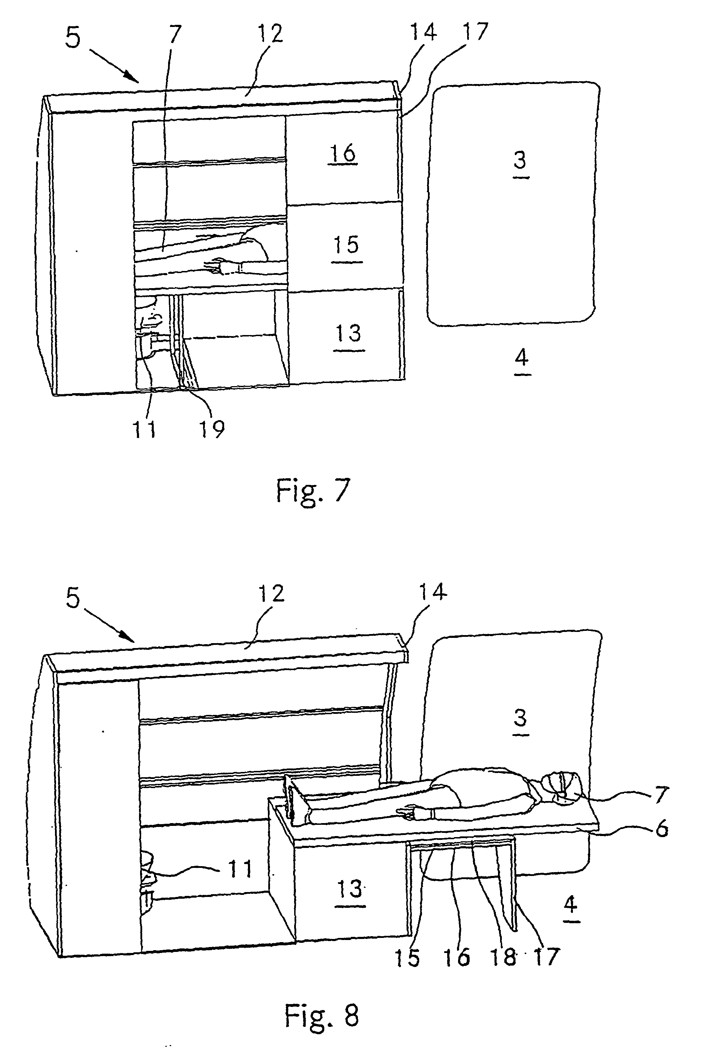

In den Fign. 7 und 8 ist eine dritte Ausführungsform der Patienten-Transporteinheit 5 dargestellt. Diese Ausführungsform der Transporteinheit 5 ist dadurch gekennzeichnet, daß der Nutzraum 12 mit einer Toilette 11 nicht den üblichen Abmessungen einer normalen Toilette bzw. einer Behindertentoilette entspricht, sondern solche Abmessungen aufweist, daß eine Krankentrage 6 vollständig aufgenommen werden kann. Ein solcher Nutzraum 12 als Kombination von Toilette 11 und Patienten-Transporteinheit 5 kann unmittelbar neben der Flugzeugtür 3 angeordnet werden.
In der Fig. 7 ist der Nutzraum 12 mit offener Tür gezeigt. Wenn kein Krankentransport notwendig ist, kann dieser Raum als Toilette 12 genutzt werden. Für eine Versorgung von Notfallopfern während des Fluges kann es vorteilhaft sein, eine Krankentrage und medizinische Versorgungsgeräte auch an Bord zu haben, wenn kein Transport von Kranken geplant ist. Zur Aufnahme von medizinischen Versorgungsgeräten kann im Nutzraum 12 ein Stauraum 13 vorgesehen sein. Die Krankentrage 6 wird in einem solchen Fall platzsparend im Nutzrahm 12 untergebracht, ohne eine Toilettenbenutzung zu stören. Für den Transport eines Patienten 7 ist die Krankentrage 6 horizontal innerhalb des Nutzraumes 12 angeordnet. Die Krankentrage 6 wird einerseits auf Einbauten im Nutzraum 12, beispielsweise einem Stauraum 13, und anderserseits auf Stützfüßen 19 der Krankentrage 6 abgestellt. Während der Start- und Landephase sowie des Ein- und Ausstiegs der Passagiere ist somit ein vollständiges Abschirmen des Patienten 7 von den Passagieren erreicht.
In der Fig. 8 ist die Patienten-Transporteinheit 5 während der Flugphase ersichtlich. Der Türbereich 4 wird neben einem Teilbereich des Nutzraumes 12 - der Stauraum 13 - als Krankentragestellfläche genutzt. Die Stirnfläche 14 des Nutzraumes 12 ist dafür mit Abklappelementen 17 und 18 versehen. Zusätzlich zur Öffnung in der Stirnwand 14 können auch Seitenwandelemente 15 und 16 (siehe Fig. 7) entfernt werden, um eine volle Zugänglichkeit zum Patienten 7 zu erreichen. In Fig. 8 ist ersichtlich, daß die Abklappelemente 17 und 18 sowie die Seitenwandelemente 15 und 16 so ineinander eingeklappt werden, daß eine Abstützung für die Krankentrage 6 erreicht wird. So bildet das Abklappelement 17 von der Stirnwand 14 den Stützfuß und die miteinander verbundenen Elemente 15, 16 und 18 die Stützfläche. Es ist ersichtlich, daß im Flugzustand, bei herausgeschobener Krankentrage 6, die im Nutzraum 12 befindliche Toilette 11 frei zugänglich ist. Da es aber keine räumliche Trennung zum Kranken gibt, wird eine Nutzung durch andere Passagiere nicht möglich sein. Lediglich der Patient selbst könnte die Toilette 12 bei entsprechenden Abschirmungen benutzen. Diese Ausführungsform der Patienten- Transporteinheit 5 bietet den Vorteil, daß das Raumangebot für die Versorgung eines Patienten 7 größer als bei den ersten Ausführungsformen der Erfindung ist. So kann insbesondere bei einer notwendigen intensiven Betreuung des Patienten - eventuell auch mit mehreren Betreuungspersonen - die Versorgung des Patienten 7 optimal erfolgen.

## Patentansprüche

1. Flugzeug mit einer Vorrichtung zum Transport von Kranken in einem Flugzeug, wobei die Vorrichtung innerhalb der Flugzeugpassagierkabine (1) angeordnet und als Patienten-Transporteinheit (5) ausgebildet ist und zumindest medizinische Versorgungsgeräte sowie eine Krankentrage (6) aufweist, **dadurch gekennzeichnet, dass** die Patienten-Transporteinheit (5) benachbart zum Türbereich (4) der Flugzeugpassagierkabine (1) vorgesehen ist sowie mit einer permanenten Liegefläche der Krankentrage (6) in eine Flugkonfiguration und eine Landekonfiguration umrüstbar ist und in Liegestellung in einen Nutzraum (2; 12) in Nähe der Flugzeugtür (3) einführbar ist, wobei in der Flugkonfiguration der Türbereich (4) zumindest teilweise als Stellplatz für die Krankentrage (6) vorgesehen ist.

2. Flugzeug nach Anspruch 1,
**dadurch gekennzeichnet, dass**
in der Landekonfiguration zumindest ein Teil des Nutzraumes (2; 12) als Stellplatz für die Krankentrage (6) vorgesehen ist.

3. Flugzeug nach einem der Ansprüche 1 bis 2
**dadurch gekennzeichnet, dass**
zwischen Türbereich (4) und Nutzraum (2) ein Stauschrank (8) vorgesehen ist, der für einen vorbestimmten Bereich der Krankentrage (6) die Stellfläche bildet.

4. Flugzeug nach einem der Ansprüche 1 bis 2
**dadurch gekennzeichnet, dass**
zwischen Türbereich (4) und Nutzraum (2) Passagiersitze mit umlegbaren Rückensitzen vorgesehen sind, die für einen vorbestimmten Bereich der **Krankentrage (6) die Stellfläche bilden.**

5. Flugzeug nach Anspruch 1,
**dadurch gekennzeichnet, dass**
direkt neben der Flugzeugtür (4) der Nutzraum (2) angeordnet ist und in der Landekonfiguration im Bereich der Flugzeugtreppe (1A) der Stellplatz für die Krankentrage (6) vorgesehen ist.

6. Flugzeug nach einem der Ansprüche 1 bis 5,
**dadurch gekennzeichnet, dass**
die Stirnwand (9; 14) des Nutzraumes (2;12) zumindest ein Abklappelement (10; 17, 18) aufweist, dessen Breite mindestens der Breite einer Krankentrage (6) entspricht und im abgeklappten Zustand eine Öffnung in der Stirnwand (9; 14) bildet, durch die die Krankentrage (6) hindurch verschiebbar ist.

7. Flugzeug nach einem der Ansprüche 1 bis 6
**dadurch gekennzelchnet, dass**
die Seitenwand neben der zu öffnenden Stirnwand des Nutzraumes (12) abklappbare Seitenwandelemente (15, 16) zur Bildung eines Zugriffsbereichs zum Patienten (7) aufweist.

8. Flugzeug nach einem der Ansprüche 1 bis 7,
**dadurch gekennzeichnet, dass**
der Nutzraum (2; 12) als Toilettenraum, vorzugsweise als Behindertentoilette (11) mit den entsprechenden Abmessungen, ausgebildet ist.

9. Flugzeug nach einem der Ansprüche 1 bis 7,
**dadurch gekennzeichnet, dass**
der Nutzraum (2; 12) solche Abmessungen aufweist, dass eine Krankentrage (6) vollständig einschiebbar ist zur Bildung einer geschlossenen Kabine.

10. Flugzeug nach einem der vorangegangenen Ansprüche,
**dadurch gekennzeichnet, dass**
Trennmittel zur Abgrenzung des Krankentransportbereiches von der übrigen Flugzeugkabine vorgesehen sind.

11. Flugzeug nach Anspruch 10,
**dadurch gekennzeichnet, dass**
die Trennmittel als Vorhänge ausgebildet sind.

## Claims

1. Aircraft with a device for transporting patients in an aircraft, the device being arranged within the aircraft passenger cabin (1) and being configured as a patient transport unit (5) and comprising at least medical supplies and equipment and a stretcher (6), **characterised in that** the patient transport unit (5) is provided adjacent to the door region (4) of the aircraft passenger cabin (1) and may be converted into a flight configuration and a landing configuration with a permanent lying surface for the stretcher (6) and in the lying position may be introduced into a usable space (2; 12) in the vicinity of the aircraft door (3), the door region (4) being provided, in the flight configuration, at least partially as a site for the stretcher (6).

2. Aircraft according to claim 1,
**characterised in that**
in the landing configuration at least one part of the usable space (2; 12) is provided as a site for the stretcher (6).

3. Aircraft according to any one of claims 1 to 2,
**characterised in that**
between the door region (4) and the usable space (2) a storage compartment (8) is provided which forms the support surface for a predetermined region of the stretcher (6).

4. Aircraft according to any one of claims 1 to 2,
**characterised in that**
between the door region (4) and the usable space (2) passenger seats with foldable seatbacks are provided which form the support surface for a predetermined region of the stretcher (6).

5. Aircraft according to claim 1,
**characterised in that**
the usable space (2) is arranged immediately adjacent to the aircraft door (4) and, in the landing configuration, the site for the stretcher (6) is provided in the region of the aircraft stairs (1A).

6. Aircraft according to any one of claims 1 to 5,
**characterised in that**
the end wall (9; 14) of the usable space (2; 12) comprises at least one element (10; 17, 18) which may be folded down, of which the width corresponds at least to the width of a stretcher (6) and in the folded-down state forms an opening in the end wall (9; 14) through which the stretcher (6) may be displaced.

7. Aircraft according to any one of claims 1 to 6,
**characterised in that**
the side wall adjacent to the end wall to be opened of the usable space (12) comprises side wall elements (15, 16) which may be folded down to form a region for accessing the patient (7).

8. Aircraft according to any one of claims 1 to 7,
**characterised in that**
the usable space (2; 12) is configured as a toilet compartment, preferably as a disabled toilet (11) with the corresponding dimensions.

9. Aircraft according to any one of claims 1 to 7,
**characterised in that**
the usable space (2; 12) comprises such dimensions that a stretcher (6) may be pushed in completely to form an enclosed cabin.

10. Aircraft according to any one of the preceding claims,
**characterised in that**
separating means are provided to delimit the patient transport region from the remaining aircraft cabin.

11. Aircraft according to claim 10,
**characterised in that**
the separating means are configured as curtains.

## Revendications

1. Avion comprenant un dispositif de transport de malades dans un avion, ledit dispositif étant installé à l'intérieur de la cabine des passagers (1) de l'avion et étant conçu comme unité (5) de transport de patients et présentant au moins des appareils médicaux ainsi qu'une civière (6), **caractérisé en ce que** l'unité (5) de transport de patients est prévue dans le voisinage de la zone de porte (4) de la cabine des passagers (1) de l'avion et peut être transformée avec une surface de couchage permanente de la civière (6) en une configuration de vol et une configuration d'atterrissage et, en position de lit, peut être placée dans un espace utilitaire (2; 12) à proximité de la porte (3) de l'avion, la zone de porte (4), en configuration de vol, étant prévue au moins partiellement comme emplacement pour la civière (6).

2. Avion selon la revendication 1, **caractérisé en ce que**, en configuration d'atterrissage, au moins une partie de l'espace utilitaire (2; 12) est prévue comme emplacement pour la civière (6).

3. Avion selon une des revendications 1 à 2, **caractérisé en ce qu'**il est prévu, entre la zone de porte (4) et l'espace utilitaire (2), une armoire de rangement (8) qui constitue une surface de pose pour une partie prédéterminée de la civière (6).

4. Avion selon une des revendications 1 à 2, **caractérisé en ce qu'**il est prévu, entre la zone de porte (4) et l'espace utilitaire (2), des sièges de passagers avec des dossiers rabattables qui constituent l'emplacement pour une partie prédétérminée de la civière (6).

5. Avion selon la revendication 1, **caractérisé en ce que** l'espace utilitaire (2) est disposé directement à côté de la porte (4) de l'avion et, en configuration d'atterrissage, l'emplacement pour la civière (6) est prévu dans la région de l'escalier (1A) de l'avion.

6. Avion selon une des revendications 1 à 5, **caractérisé en ce que** la paroi frontale (9; 14) de l'espace utilitaire (2; 12) présente au moins un élément rabattable (10; 17, 18) dont la largeur correspond au moins à la largeur d'une civière (6) et qui, lorsqu'il est rabattu, forme une ouverture dans la paroi frontale (9; 14), à travers laquelle la civière (6) peut être glissée.

7. Avion selon une des revendications 1 à 6, **caractérisé en ce que** la paroi latérale située à proximité de la paroi frontale ouvrante de l'espace utilitaire (12) comporte des éléments de paroi latérale (15, 16) rabattables, destinés à former une zone d'accès au patient (7).

8. Avion selon une des revendications 1 à 7, **caractérisé en ce que** l'espace utilitaire (2; 12) est agencé comme cabinet de toilette, de préférence comme toilettes pour handicapés (11), avec des dimensions adaptées.

9. Avion selon une des revendications là 7, **caractérisé en ce que** l'espace utilitaire (2; 12) présente des dimensions telles qu'une civière (6) puisse être complètement introduite pour former une cabine fermée.

10. Avion selon une des revendications précédentes, **caractérisé en ce qu'**il est prévu des moyens de séparation pour délimiter la zone de transport de malades du reste de la cabine de l'avion.

11. Avion selon la revendication 10, **caractérisé en ce que** les moyens de séparation sont réalisés sous forme de rideaux.
